# EUROPÄISCHE PATENTSCHRIFT

(11) **EP 4 193 840 B1**
(45) Veröffentlichungstag und Bekanntmachung des Hinweises auf die Patenterteilung: **12.08.2026**
(21) Anmeldenummer: 21212814.4
(22) Anmeldetag: 07.12.2021
(51) Int. Cl.: A22C 21/00, B65G 19/02, B65G 35/06

(54) **VORRICHTUNG UND VERFAHREN ZUM FÖRDERN VON ARTIKELN DER LEBENSMITTELVERARBEITENDEN INDUSTRIE**
DEVICE AND METHOD FOR CONVEYING ITEMS IN THE FOOD PROCESSING INDUSTRY
DISPOSITIF ET PROCÉDÉ DE TRANSPORT DES ARTICLES DE L'INDUSTRIE DE LA TRANSFORMATION ALIMENTAIRE

(43) Veröffentlichungstag der Anmeldung: 14.06.2023
(73) Patentinhaber: FPI Food Processing Innovation GmbH & Co. KG, 23556 Lübeck (DE)
(72) Erfinder: SCHLESIGER, Oliver, 23556 Lübeck (DE)
(74) Vertreter: Stork Bamberger Patentanwälte PartmbB

(56) Entgegenhaltungen:
- WO-A1-2014/098608
- WO-A1-2019/038231
- WO-A1-2020/162753
- DE-T2- 60 316 104
- US-A- 3 263 270

## Beschreibung

### Beschreibung

Die vorliegende Erfindung betrifft eine Vorrichtung zum Fördern von Artikeln der lebensmittelverarbeitenden Industrie sowie eine Anordnung zur Bearbeitung von Artikeln der lebensmittelverarbeitenden Industrie, umfassend eine zum Fördern der Artikel entlang einer Förderstrecke in Transportrichtung eingerichtete Fördereinrichtung mit einer Mehrzahl von zur Aufnahme der Artikel eingerichteten Halteelementen, mindestens eine sich in der Transportrichtung erstreckende Führung, die eingerichtet ist, an dieser in der Transportrichtung bewegbar angeordnete Führungselemente zu führen, wobei an jedem der Führungselemente eines der Halteelemente höhenverstellbar angeordnet ist, an der Förderstrecke angeordnete und zum Verstellen der jeweiligen Höhenlage der Halteelemente relativ zu dem jeweiligen Führungselement eingerichtete steuerbare Stellmittel, wobei die Stellmittel ausgebildet sind, beim Passieren der Halteelemente steuerbar mit diesen in Verstelleingriff zur Verstellung der jeweiligen Höhenlage des Halteelements zu gelangen.

Weiterhin betrifft die Erfindung ein Verfahren zur Förderung von Artikeln der lebensmittelverarbeitenden Industrie, umfassend Fördern der Artikel entlang einer Förderstrecke in Transportrichtung mittels einer Fördereinrichtung mit einer Mehrzahl von zur Aufnahme der Artikel eingerichteten Halteelementen, Führen von Führungselementen mittels mindestens einer sich in der Transportrichtung erstreckenden Führung, wobei die Führungselemente in der Transportrichtung beweglich angeordnet sind, und wobei an jedem der Führungselemente eines der Halteelemente höhenverstellbar angeordnet ist, steuerbares Verstellen der jeweiligen Höhenlage der Halteelement mittels an der Förderstrecke angeordneten und zum Verstellen der jeweiligen Höhenlage der Halteelemente relativ zu dem jeweiligen Führungselement eingerichteten steuerbaren Stellmitteln, wobei die Stellmittel beim Passieren der Halteelemente steuerbar mit diesen in Verstelleingriff zur Verstellung der jeweiligen Höhenlage des Halteelements gelangen.

Die Erfindung betrifft ferner eine Anordnung sowie ein Verfahren zur Bearbeitung von Artikeln der lebensmittelverarbeitenden Industrie.

Bei den Artikeln der lebensmittelverarbeitenden Industrie handelt es sich insbesondere um Schlachttierkörper oder Teilen davon, beispielsweise um Geflügelbeine oder Eingeweidepakete. Beim Entweiden der Schlachttierkörper werden die Eingeweide aus der Bauchhöhle entnommen und separat gefördert. Anschließend erfolgt eine Trennung der Organe, insbesondere in solche die für den Verzehr geeignet sind und in für den Menschen nicht verzehrbare Organe. Insbesondere bei diesem Vorgang ist die erfindungsgemäße Höhenverstellbarkeit bei der Bearbeitung vorteilhaft. Grundsätzlich ist die vorliegende Erfindung zum Fördern unterschiedlichster Artikel der lebensmittelverarbeitenden Industrie geeignet, sofern diese vereinzelbar und im Stück förderbar sind. Insbesondere eignet sich die vorliegende Erfindung zum Fördern von Artikeln, die hängend gefördert werden.

Bei der industriellen Verarbeitung von Artikeln der lebensmittelverarbeitenden Industrie, ist es während des Be- und/oder Verarbeitungsprozesses in der Regel erforderlich, während des Förderns die Förderhöhe der Artikel, d. h. das jeweilige Höhenniveau der Artikel über Grund, steuervariabel anzupassen.

So ist es beispielsweise bei der Verarbeitung von Geflügelbeinen hinlänglich bekannt, beim Entbeinen derselben, deren Höhe während des Fördervorgangs zu verändern um diese so einzustellen, dass die Geflügelbeine optimal mit den jeweiligen Werkzeugen in Eingriff gelangen.

Aus dem Dokument WO 2020 / 1 627 53 A1 sind Schäkel zur Hängeförderung von Geflügel bekannt, deren Höhe verstellbar ist. Der Schäkel ist über einen Stab, der durch eine Bohrung eines Trägers geführt ist relativ zu dem Träger in axialer Richtung zur Höhenverstellung verstellbar eingerichtet. In dem Träger ist zudem ein senkrecht zur Axialrichtung bewegbarer Arretierstift angeordnet, der zwischen einer ersten und zweiten Position bewegt wird. Der ersten Position kommt der Arretierstift mit dem Stab in Eingriff, sodass dieser in einer vorbestimmten axialen Position relativ zu dem Träger gehalten wird. In der zweiten Position gibt der Arretierstift den Stab frei, sodass dieser sich in der genannten Axialrichtung relativ zu dem Träger bewegen kann.

Die bekannte Lösung zur Höhenverstellung weist jedoch eine Reihe von Nachteilen auf. So wird durch Verstellen des Arretierstiftes zwischen der ersten und zweiten Position der Stab an dem Träger arretiert bzw. wieder von diesem gelöst. Hierzu ist es erforderlich, den Arretierstift senkrecht zu der Axialrichtung zu betätigen. Um die gewünschte Höheneinlage der Schäkel einzustellen, müssen diese zudem in der Axialrichtung verstellt werden. Zur Verstellung der Höhenlage der Schäkel es ist also erforderlich, sowohl den Arretierstift quer zur Axialrichtung zu bewegen, als auch den Schäckel selbst in Axialrichtung zu verstellen. Folglich werden unterschiedliche Führungselemente benötigt, um sowohl den Arretierstift quer zur Axialrichtung zu bewegen, als auch den Schäckel selbst in der Axialrichtung in seiner Höhenlage zu verstellen.

Eine weitere höhenverstellbare Hängeförderung geht beispielsweise aus dem Dokument DE 34 37 0701 hervor. Die Arretierung der gewünschten Höhenlage erfolgt durch radial verschiebbaren Sperrelemente.

Aus dem Dokument WO 2019 / 038231 A1 ist eine zum Heben von in Reihe hängend geförderten Geflügelbeinen eingerichtete Hebevorrichtung bekannt. Mittels eines Arretierelements in Form eines Sperrhebels oder dergleichen kann das Fußtragteil in der normalen Hängeteil an dem Trägeraufhängeteil vorzugsweise selbsttätig festgesetzt und ggf. wieder gelöst werden.

Es ist daher die Aufgabe der vorliegenden Erfindung, eine Vorrichtung vorzuschlagen, die eine möglichst einfache Verstellung der Höhenlage der geförderten Artikel bei möglichst geringem apparativem Aufwand erlaubt. Zudem ist es Aufgabe der vorliegenden Erfindung eine Vorrichtung bereitzustellen, die robust und zuverlässig die genannte Höhenverstellung der Artikel erlaubt. Des Weiteren besteht die Aufgabe darin, ein entsprechendes Verfahren vorzuschlagen. Die Aufgabe besteht auch darin, eine Anordnung sowie ein Verfahren zur Bearbeitung der Artikel der lebensmittelverarbeitenden Industrie vorzuschlagen.

Die Aufgabe wird durch eine Vorrichtung mit den eingangs genannten Merkmalen dadurch gelöst, dass jedes der Halteelemente an dem jeweiligen der Führungselemente mittels einer Selbsthalteeinrichtung angeordnet ist, die derart ausgebildet ist, dass das Halteelement relativ zu dem Führungselement in Aufwärtsrichtung entgegen der Schwerkraft beweglich ist und in Abwärtsrichtung das Halteelement an dem Führungselement in einer Sperrposition lösbar arretiert ist. Die erfindungsgemäße Selbsthalteeinrichtung bietet den Vorteil, dass das Halteelement bei einer Abwärtsbewegung selbsttätig an dem Führungselement in einer definierten unteren Position, nämlich in der Sperrposition, an dem Führungselement arretiert. Mit anderen Worten ist die Selbsthalteeinrichtung selbst arretierend ausgebildet.

Wird hingegen das Halteelement in Aufwärtsrichtung mittels der Stellmittel angehoben, so wird das Halteelement aus der Sperrposition gelöst und kann sich nun relativ zu dem Führungselement in jede gewünschte Höhenlage frei bewegen. Dies bietet den Vorteil, dass zur Verstellung der Höhenlage der geförderten Artikel mittels der Stellmittel ausschließlich in Axialrichtung auf die Halteelemente eingewirkt wird, um deren Höhenlage zu verstellen. Folglich ist der apparative Aufwand, um die Höhenlage der Halteelemente sowie der darin geförderten Artikel zu verstellen auf ein Minimum reduziert. In Bereichen, in denen keine Stellmittel zum Anheben der Halteelemente angeordnet sind, bewegt sich das Halteelement unter Schwerkrafteinwirkung in Abwärtsrichtung und gelangt so in die Sperrposition, in der es mittels der Selbsthalteeinrichtung an dem Führungselement lösbar arretiert wird. Vorteilhafterweise wird durch die vorliegende Erfindung erreicht, dass mit den ausschließlich in Axialrichtung wirkenden Stellmitteln eine Höhenverstellung der Halteelemente möglich ist. Auf diese Weise wird der apparative Aufwand auf ein Minimum reduziert und zugleich eine robuste und zuverlässige Höhenverstellung der Halteelemente realisiert.

Eine zweckmäßige Ausgestaltung der Erfindung ist dadurch gekennzeichnet, dass die Selbsthalteeinrichtung einen durch einen Hohlzylinder sowie einen durch den Hohlzylinder geführten Innenzylinder umfasst, wobei der Hohlzylinder an dem Führungselement angeordnet ist und der Innenzylinder an dem Halteelement angeordnet ist, und wobei der Hohlzylinder mindestens einen Aufnahmeraum zur Aufnahme von mindestens einem Sperrelement umfasst, die eingerichtet sind, in der Sperrposition mit dem Innenzylinder reibschlüssig in Eingriff zu gelangen. Insbesondere sind der Aufnahmeraum sowie die Sperrelemente derart ausgebildet und eingerichtet, dass diese sich ausschließlich in Axialrichtung bewegen. Mit anderen Worten sind die Sperrelemente in dem Aufnahmeraum derart angeordnet, dass diese radialbewegungsfrei eingerichtet sind. Weiter bevorzugt sind die Geometrie des Aufnahmeraumes sowie die Anordnung der Sperrelemente darin derart eingerichtet, dass die Sperrelemente in der Sperrposition mit dem Innenzylinder in Reibschluss gelangen, sodass der Innenzylinder über die Sperrelemente an dem Hohlzylinder reibschlüssig lösbar verbunden ist und so das Halteelement an dem Führungselement lösbar arretiert ist.

Eine bevorzugte Weiterbildung der Erfindung zeichnet sich dadurch aus, dass der Aufnahmeraum als Ringraum zur Aufnahme einer Mehrzahl der Sperrelemente ausgebildet ist. Vorteilhafterweise sind so die Sperrelemente zwischen der Außenfläche des Innenzylinders und der Innenfläche des Hohlzylinder spielfrei angeordnet. Auf diese Weise sind die Sperrelemente mit dem Innenzylinder derart in Anlagekontakt, dass bei einer Relativbewegung des Halteelemente in Abwärtsrichtung der genannte Reibschluss zustande kommt und das Halteelement in seiner Sperrposition wieder lösbar an den Führungselement arretiert wird. Vorteilhafter Weise sind die Sperrelemente kugelförmig ausgebildet.

Eine weitere zweckmäßige Ausgestaltung der Erfindung ist dadurch gekennzeichnet, dass der Aufnahmeraum in der Abwärtsrichtung sich verjüngend ausgebildet ist. Hierdurch wird erreicht, dass die Sperrelemente durch eine Abwärtsbewegung der Halteelemente in der Sperrposition in eine Klemmstellung gelangen, in der die Reibungskräfte zwischen dem Innenzylinder, den Sperrelementen und dem Außenzylinder hinreichend groß sind, um die vorgenannten Bauteile gegen eine weitere Relativbewegung zueinander in einem Klemmsitz zu überführen. Ein weiterer Vorteil besteht darin, dass durch den sich verjüngend ausgebildeten Aufnahmeraum die Sperrelemente mit steigender Gewichtskraft der an den Halteelementen angeordneten Artikel ebenfalls mit einem größeren Anpressdruck gegen die Außenfläche gedrückt werden. Mit steigender Gewichtskraft der Artikel, steigt folglich auch der auf die Außenflächen des Innenzylinders wirkende Anpressdruck, sodass der Reibschluss erhöht wird. Dies unterstützt die Selbstarretierungsfunktion der erfindungsgemäßen Selbsthalteeinrichtung.

Eine bevorzugte Weiterbildung der Erfindung zeichnet sich dadurch aus, dass in dem Aufnahmeraum mindestens eine Federelement angeordnet ist, das eingerichtet ist, die Sperrelemente in der Abwärtsrichtung mit einer Federkraft zu beaufschlagen. Vorteilhafter Weise werden so die Federelemente - neben der schon auf diese wirkenden Schwerkraft - unter steter Federkraftbeaufschlagung in Abwärtsrichtung gedrückt, so dass diese sich stets in vorspannungsbeaufschlagter Kontaktanlage mit dem Innenrohr befinden und kein Radialspiel aufweisen. Hierdurch wird sichergestellt, dass die Sperrelemente unmittelbar bei einer Abwärtsbewegung der Halteelemente in Reibschluss gelangen und das Halteelement in der Sperrposition an dem Führungselement arretiert.

Eine weitere zweckmäßige Ausbildung der Erfindung ist dadurch gekennzeichnet, dass in dem Aufnahmeraum unterhalb der Sperrelemente eine Schiebehülse um den Innenzylinder angeordnet ist, die mittels eines Betätigungselements zum Lösen der Sperrelemente aus dem Reibschlusseingriff in der Sperrposition in Längsrichtung des Innenzylinders bewegbar eingerichtet ist. Dies bietet den Vorteil, dass durch Anheben des Betätigungselements entgegen der Schwerkraftrichtung die Schiebehülse aufwärtsbewegt wird und so die Sperrelemente ebenfalls in Längsaxialrichtung angehoben werden. Hierdurch wird der in der Sperrposition bestehende Reibschluss aufgehoben und die Arretierung des Halteelemente an dem Führungselement aufgehoben. Das mit der Schiebehülse verbundene Betätigungselement ist daher ausgebildet, die in der Sperrposition bestehende Arretierung durch Aufwärtsbewegen des Betätigungselements relativ zu dem Führungselement zu lösen. Auf diese Weise ermöglicht das Betätigungselement sowohl ein steuervariables Lösen, als auch ein steuervariables Arretieren des Halteelements an dem Führungselement.

Eine bevorzugte Weiterbildung der Erfindung zeichnet sich dadurch aus, dass die Stellmittel als schwenkbewegliche Gleitflächenelemente ausgebildet sind, die zum Anheben der Halteelemente aus einer Wartestellung in eine Hebestellung steuerbar schwenkbar eingerichtet sind. Anders ausgedrückt sind die Gleitflächenelemente derart ausgebildet, dass diese derart mit den Halteelementen in Eingriff gelangen, dass in Abhängigkeit ihrer jeweiligen Schwenkposition die Halteelemente auf ihrem jeweiligen Höhenniveau verweilen oder durch die jeweilige Schwenkstellung der Gleitflächenelemente aus der Wartestellung in die Hebestellung angehoben werden. Dies bietet den Vorteil, dass die jeweilige Höhenlage der Halteelemente beim Passieren des jeweiligen Gleitflächenelements steuervariabel veränderbar ist.

Eine weitere zweckmäßige Ausbildung der Erfindung ist dadurch gekennzeichnet, dass am oberen freien Ende des Führungselements ein Steuerkopf angeordnet ist, der ausgebildet ist, mit den Gleitflächenelementen in Führungsanlage zu kommen. Vorzugsweise sind die Gleitflächenelemente derart ausgebildet, dass diese zwei paarige Gleitflächen umfassen, die sich entlang der Förderstrecke in die Transportrichtung erstrecken. Diese Gleitflächen sind so voneinander beabstandet, dass das Führungselement während des Fördervorgangs zwischen diesen hindurchgreift, wobei der Steuerkopf auf den Gleitflächen jeweils seitlich aufliegt.

Durch Verschwenken der Gleitflächenelemente und der damit verbundenen Änderung der Winkellage der Gleitflächen, wird die zuvor beschriebene Höhenverstellung der Führungselemente sowie der Halteelemente bewirkt. Hierzu ist die Breite des Steuerkopfes vorzugsweise größer als der kleinste Abstand der beiden Gleitflächen voneinander gewählt, sodass dieser die Gleitflächen zumindest teilweise übergreift und auf diese Weise in Führungsanlage kommt.

Weiter bevorzugt sind an dem Steuerkopf jeweils an gegenüberliegenden Seiten paarig Kugellager angeordnet, die eingerichtet sind, über die Gleitflächen zu rollen. Weiter bevorzugt umfasst der Steuerkopf vier der genannten Kugellager, die jeweils um 90° versetzt an dem Steuerkopf angeordnet sind. Dies bietet den Vorteil, dass die Führung und die Halteelemente um die Längsachse verschwenkt werden können, um die Artikel bei der Bearbeitung um die Längsachse zu drehen, um diese in eine für die jeweilige Bearbeitung günstigere Position zu bringen.

Eine bevorzugte Weiterbildung der Erfindung zeichnet sich dadurch aus, dass die Stellmittel weiter Steuermittele umfassen, die zum Absenken der Halteelemente aus der Hebestellung in die Wartestellung eingerichtet sind, und dabei mit dem Betätigungselement zum Lösen der Sperrelemente in Eingriff gelangen. Anders ausgedrückt sind die Steuermittel eingerichtet, auf das Betätigungselement derart einzuwirken, dass die Arretierung zwischen dem Halteelemente dem Führungselement gelöst wird, sodass sich diese in der Längsachse zumindest im Wesentlichen senkrecht bzw. quer zu der Förderrichtung frei relativ zueinander bewegen können. Im Wesentlichen senkrecht bedeutet entweder senkrecht oder um einen geringen Winkel von der Senkrechten abweichend. Auf diese Weise lassen sich die Halteelemente wie zuvor beschrieben absenken.

Des Weiteren wird die Aufgabe durch eine entsprechende Anordnung mit den eingangs genannten Merkmalen dadurch gelöst, dass die Anordnung die zuvor beschriebene Vorrichtung zur Förderung von Artikeln der lebensmittelverarbeitenden Industrie sowie mindestens eine zur Bearbeitung der Artikel ausgebildete Bearbeitungsstation umfasst, wobei die Vorrichtung eingerichtet ist, die Höhenlage der Artikel gemäß der jeweils zur Bearbeitung der Artikel mittels der mindestens einen Bearbeitungsstation vorgegebene Bearbeitungshöhe während des Förderns einzustellen. Vorteilhafterweise ist es so möglich, die Höhenlage der zu bearbeitenden Artikel automatisch während des Fördervorgangs an die Gegebenheiten der jeweiligen Bearbeitungsstation optimal anzupassen. So ist stets eine optimale Bearbeitung der Artikel gewährleistet.

Gemäß einer weiteren bevorzugten Ausführungsform sind die Artikel Geflügel oder Geflügelteile. Insbesondere sind die Artikel Geflügelbeine und die Bearbeitungsstationen eingerichtet, diese zu entbeinen. Gerade die Bearbeitung von Geflügel oder Geflügelteilen erfordert regelmäßig einen Wechsel der Höhenlage der geförderten Artikel, um diese optimal mittels der Bearbeitungsstationen bearbeiten zu können. Die erfindungsgemäße Anordnung daher insbesondere zur automatischen Bearbeitung von Geflügelbeinen ausgebildet und eingerichtet.

Des Weiteren wird die Aufgabe durch ein entsprechendes Verfahren mit den eingangs genannten Merkmalen gelöst, und zeichnet sich durch Freigeben der Bewegbarkeit des Halteelements relativ zu dem Führungselement in Aufwärtsrichtung entgegen der Schwerkraft und lösbares Arretieren jedes der Halteelemente an dem jeweiligen Führungselement in der Sperrposition mittels einer Selbsthalteeinrichtung aus.

Die mit der erfindungsgemäßen Vorrichtung einhergehenden Vorteile gelten in analoger Weise auch für das erfindungsgemäße Verfahren. Zur Vermeidung von Wiederholungen wird daher im Zusammenhang mit dem Verfahren auf die bereits genannten Vorzüge der Vorrichtung verweisen und im Folgenden zu den Vorteilen des Verfahrens nur ergänzend näher ausgeführt.

Das Freigeben und lösbare Arretieren der Halteelemente an dem jeweiligen Führungselement mittels der Selbsthalteeinrichtung bietet den Vorteil, dass das Halteelement bei einer Abwärtsbewegung selbsttätig an dem Führungselement in einer definierten unteren Position, nämlich in der Sperrposition, an dem Führungselement arretiert. Wird hingegen das Halteelement in Aufwärtsrichtung mittels der Stellmittel angehoben, so wird das Halteelement aus der Sperrposition gelöst und kann sich nun relativ zu dem Führungselement in jede gewünschte Höhenlage frei bewegen. Die Verstellung der Höhenlage der geförderten Artikel erfolgt also mittels der Stellmittel so, dass ausschließlich in Axialrichtung auf die Halteelemente eingewirkt wird, um deren Höhenlage zu verstellen. Folglich ist der apparative und verfahrenstechnische Aufwand, um die Höhenlage der Halteelemente sowie der darin geförderten Artikel zu verstellen auf ein Minimum reduziert.

In Bereichen, in denen keine Stellmittel zum Anheben der Halteelemente angeordnet sind, bewegt sich das Halteelement unter Schwerkrafteinwirkung in Abwärtsrichtung und gelangt so in die Sperrposition, in der es mittels der Selbsthalteeinrichtung an dem Führungselement lösbar arretiert wird. Vorteilhafterweise wird durch das erfindungsgemäße Verfahren erreicht, dass mit den ausschließlich in Axialrichtung wirkenden Stellmitteln eine Höhenverstellung der Halteelemente möglich ist. Auf diese Weise wird der apparative Aufwand auf ein Minimum reduziert und zugleich eine robuste und zuverlässige Höhenverstellung der Halteelemente realisiert.

Eine weitere zweckmäßige Ausgestaltung der Erfindung ist dadurch gekennzeichnet, dass die Selbsthalteeinrichtung einen durch einen Hohlzylinder sowie einen durch den Hohlzylinder geführten Innenzylinder umfasst, wobei der Hohlzylinder an dem Führungselement angeordnet ist und der Innenzylinder an dem Halteelement angeordnet ist, und wobei der Hohlzylinder mindestens einen Aufnahmeraum zur Aufnahme von mindestens einem der Sperrelemente umfasst, und die Sperrelemente in der Sperrposition mit dem Innenzylinder reibschlüssig in Eingriff gelangen.

Eine bevorzugte Weiterbildung der Erfindung zeichnet sich dadurch aus, dass der reibschlüssige Eingriff durch eine Mehrzahl der in dem als Ringraum ausgebildeten Aufnahmeraum angeordneten Sperrelemente erfolgt. Vorteilhafterweise bewegen sich die Sperrelemente zwischen der Außenfläche des Innenzylinders und der Innenfläche des Hohlzylinder spielfrei. Die Sperrelemente sind also mit dem Innenzylinder derart in Anlagekontakt, dass bei einer Relativbewegung der Halteelemente in Abwärtsrichtung der genannte Reibschluss zustande kommt und das Halteelement in seiner Sperrposition wieder lösbar an den Führungselement arretiert wird.

Eine weitere zweckmäßige Ausbildung der Erfindung ist dadurch gekennzeichnet, dass als Sperrelemente Kugeln verwendet werden.

Eine weitere zweckmäßige Ausbildung der Erfindung ist gekennzeichnet durch Bewirken des reibschlüssigen Eingriffs in der Sperrposition durch Klemmen der Sperrelemente in dem Aufnahmeraum, der sich in der Abwärtsrichtung verjüngt. Die Sperrelemente gelangen so durch eine Abwärtsbewegung der Halteelemente in der Sperrposition in eine Klemmstellung. In dieser Klemmstellung sind die Reibungskräfte zwischen dem Innenzylinder, den Sperrelementen und dem Außenzylinder hinreichend groß, um die vorgenannten Bauteile gegen eine weitere Relativbewegung zueinander in einem Klemmsitz zu überführen. Ein weiterer Vorteil besteht darin, dass durch den sich verjüngend ausgebildeten Aufnahmeraum die Sperrelemente mit steigender Gewichtskraft der an den Halteelementen angeordneten Artikel ebenfalls mit einem größeren Anpressdruck gegen die Außenfläche gedrückt werden. Mit steigender Gewichtskraft der Artikel, steigt folglich auch der auf die Außenflächen des Innenzylinders wirkende Anpressdruck, sodass der Reibschluss erhöht wird. Dies unterstützt die Selbstarretierungsfunktion der erfindungsgemäßen Selbsthalteeinrichtung.

Eine weitere zweckmäßige Ausgestaltung der Erfindung ist durch Beaufschlagen der Sperrelemente in der Abwärtsrichtung mit einer Federkraft mittels mindestens einem in dem Aufnahmeraum angeordneten Federelement gekennzeichnet. Vorteilhafter Weise werden so die Federelemente - neben der schon auf diese wirkenden Schwerkraft - unter steter Federkraftbeaufschlagung in Abwärtsrichtung gedrückt, so dass diese sich stets in vorspannungsbeaufschlagter Kontaktanlage mit dem Innenrohr befinden und kein Radialspiel aufweisen. Hierdurch wird sichergestellt, dass die Sperrelemente unmittelbar bei einer Abwärtsbewegung der Halteelemente in Reibschluss gelangen und das Halteelement in der Sperrposition an dem Führungselement arretiert.

Eine bevorzugte Weiterbildung der Erfindung zeichnet sich durch Lösen der Sperrelemente aus dem Reibschlusseingriff in der Sperrposition mittels einer in dem Aufnahmeraum unterhalb der Sperrelemente um den Innenzylinder angeordneten Schiebehülse durch Bewegen der Schiebehülse in Längsrichtung des Innenzylinders mittels eine Betätigungselements aus. Durch Anheben des Betätigungselements entgegen der Schwerkraftrichtung wird so vorteilhafter Weise die Schiebehülse aufwärtsbewegt und die Sperrelemente ebenfalls in Längsaxialrichtung angehoben. Hierdurch wird der in der Sperrposition bestehende Reibschluss aufgehoben und die Arretierung des Halteelemente an dem Führungselement gelöst. Durch Verstellen des Betätigungselements ist daher sowohl ein steuervariables Lösen, als auch ein steuervariables Arretieren des Halteelements an dem Führungselement möglich.

Eine weitere zweckmäßige Ausbildung der Erfindung ist durch Anheben der Halteelemente aus einer Wartestellung in eine Hebestellung durch steuerbares Schwenken der als schwenkbewegliche Gleitflächenelemente ausgebildeten Sperrelemente gekennzeichnet. Durch Verschwenken des Neigungswinkels der Gleitflächenelemente ist es möglich die Höhenlage automatisch an die jeweils gewünschte Höhe steuervariabel anzupassen.

Eine weitere zweckmäßige Ausgestaltung der Erfindung ist durch in Führungsanlagebringen der Gleitflächenelemente mit einem am oberen freien Ende des Führungselements angeordneten Steuerkopf gekennzeichnet.

Eine bevorzugte Weiterbildung der Erfindung zeichnet sich durch Eingriff von Stellmitteln mit dem Betätigungselement zum Lösen der Sperrelemente und Absenken der Halteelemente aus der Hebestellung in die Wartestellung aus.

Die Aufgabe wird auch durch das eingangs genannte Verfahren zur Bearbeitung von Artikeln der lebensmittelverarbeitenden Industrie, wobei diese die zuvor beschriebenen Schritte des Verfahrens zur Förderung von Artikeln der lebensmittelverarbeitenden Industrie umfasst und weiter das Bearbeiten der Artikel mittels mindestens einer Bearbeitungsstation umfasst, wobei die Höhenlage der Artikel gemäß der jeweils zur Bearbeitung der Artikel mittels der mindestens einen Bearbeitungsstation vorgegebene Bearbeitungshöhe während des Förderns eingestellt wird. Vorteilhafterweise ist es so möglich, die Höhenlage der zu bearbeitenden Artikel automatisch während des Förderbandes an die Gegebenheiten der jeweiligen Bearbeitungsstation optimal anzupassen. So ist stets eine optimale Bearbeitung der Artikel gewährleistet.

Eine weitere zweckmäßige Ausbildung der Erfindung ist dadurch gekennzeichnet, dass die Artikel Geflügel oder Geflügelteile sind. Gerade die Bearbeitung von Geflügel oder Geflügelteilen erfordert regelmäßig einen Wechsel der Höhenlage der geförderten Artikel, um diese optimal mittels der Bearbeitungsstationen bearbeiten zu können. Das erfindungsgemäße Verfahren ist daher insbesondere zur automatischen Bearbeitung von Geflügelbeinen ausgebildet und eingerichtet.

Gemäß einer weiteren bevorzugten Ausführungsform sind die Artikel Geflügel oder Geflügelteile. Insbesondere sind die Artikel Geflügelbeine und die Bearbeitungsstationen eingerichtet, diese zu entbeinen. Gerade die Bearbeitung von Geflügel oder Geflügelteilen erfordert regelmäßig einen Wechsel der Höhenlage der geförderten Artikel, um diese optimal mittels der Bearbeitungsstationen bearbeiten zu können. Die erfindungsgemäße Anordnung daher insbesondere zur automatischen Bearbeitung von Geflügelbeinen ausgebildet und eingerichtet.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: das erfindungsgemäße Halte- und Führungselement zur Förderung der Artikel im Querschnitt,

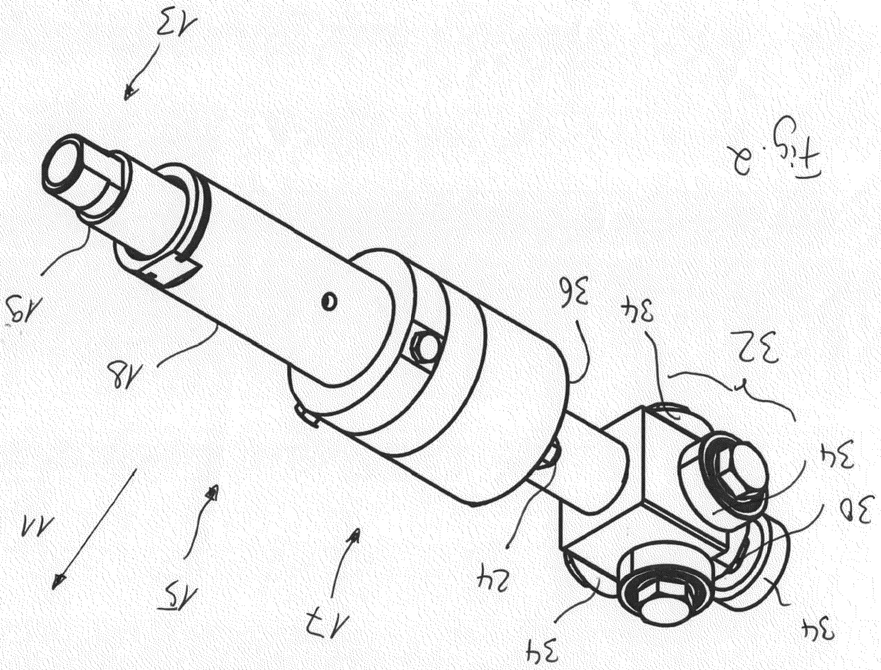

- Fig. 2: eine perspektivische Ansicht der in Figur 1 gezeigten Vorrichtungsteile,
- Fig. 3: eine Draufsicht der in Fig. 1 und 2 gezeigten Teile,
- Fig. 4: eine perspektivische Ansicht der erfindungsgemäßen Anordnung,
- Fig. 5: die in Figur 4 gezeigte Anordnung in Seitenansicht,
- Fig. 6: eine perspektivische Ansicht von Halte- und Führungselement sowie der Selbsthalteeinrichtung mit ausgeblendetem Gehäuse und
- Fig. 7: eine vergrößerte Darstellung eines Ausschnitts der Fig. 6 mit Blick auf das Federelement 37.

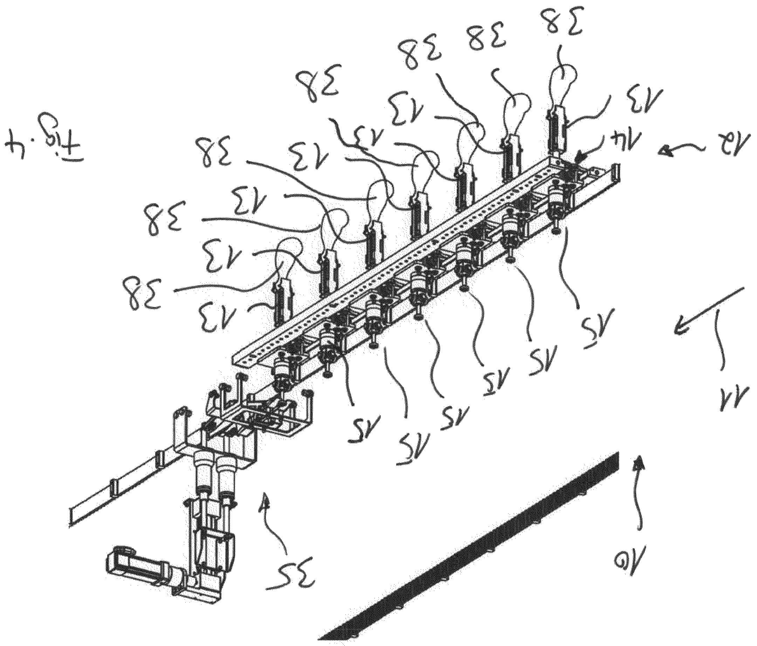

Die erfindungsgemäße Vorrichtung umfasst eine zum Fördern der - in der Zeichnung nicht gezeigten - Artikel entlang einer Förderstrecke 10 in Transportrichtung 11 eingerichtete Fördereinrichtung 12. Die Fördereinrichtung 12 umfasst eine Mehrzahl von zur Aufnahme der Artikel eingerichteten Halteelementen 13. Wir in Figur 4 gezeigt weist die Vorrichtung mindestens eine sich in der Transportrichtung 11 erstreckende Führung 14 auf, die eingerichtet ist, an dieser in der Transportrichtung 11 bewegbar angeordnete Führungselemente 15 zu führen. Die Führungselemente 15 bilden also bewegliche Aufnahmeelemente, die sich vorzugweise kontinuierlich in der Transportrichtung bewegen. An jedem der Führungselemente 15 ist eines der Halteelemente 13 höhenverstellbar angeordnet.

An der Förderstrecke 10 sind steuerbare Stellmittel angeordnet. Die Stellmittel sind zum Verstellen der jeweiligen Höhenlage der Halteelemente 13 relativ zu dem jeweiligen Führungselement 15 eingerichtet. Dabei sind die Stellmittel ausgebildet und eingerichtet, beim Passieren der Halteelemente 13 steuerbar mit diesen in Verstelleingriff zur Verstellung der jeweiligen Höhenlage des Halteelements 13 zu gelangen. Mit anderen Worten sind die Stellmittel derart eingerichtet, dass diese beim Passieren der Halteelemente 13 auf diese einwirken und je nach deren Stellung eine Veränderung der Höhenlage der Halteelement 13 bewirken.

Jedes der Halteelemente 13 ist an dem jeweiligen der Führungselement 15 mittels einer Selbsthalteinrichtung 17 angeordnet ist. Die Selbsthalteeinrichtung 17 ist so eingerichtet, dass das Halteelement 13 relativ zu dem Führungselement 15 in Aufwärtsrichtung entgegen der Schwerkraft beweglich ist. In Abwärtsrichtung wird das Halteelement 13 hingegeben an dem Führungselement 15 in einer Sperrposition lösbar arretiert. Eine Aufwärtsbewegung des Halteelements 13 ist folglich stets möglich, während bei einer Abwärtsbewegung eine automaische Arretierung bewirkt wird. Mit anderen Worten ist die Selbsthalteeinrichtung 17 selbstarretierend ausgebildet.

Die Selbsthalteeinrichtung 17 ist ferner eingerichtet, das Halteelement 13 aus der Sperrposition zu lösen, sodass sich dieses nun relativ zu dem Führungselement 15 in jede gewünschte Höhenlage frei bewegen lässt, sofern das Halteelement 13 in Aufwärtsrichtung mittels der Stellmittel angehoben. Um also die Höhenlage der geförderten Artikel mittels der Stellemittel zu verstellen, ist es erforderlich, ausschließlich in Axialrichtung auf die Halteelemente 13 einzuwirken. Folglich ist der apparative Aufwand, um die Höhenlage der Halteelemente 13 sowie der damit geförderten Artikel zu verstellen auf ein Minimum reduziert.

Vorteilhafterweise ist die Selbsthalteeinrichtung 17 ausgebildet, in Bereichen, in denen keine Stellmittel zum Anheben bzw. Halten der Halteelemente 13 angeordnet sind, eine durch die Schwerkraft induzierte Abwärtsbewegung der jeweiligen Halteelements 13 zuzulassen, bis dieses selbsttätig in die Sperrposition gelangt. Die Selbsthalteeinrichtung 17 ist ausgebildet, beim Erreichen der Sperrposition das Halteelement 13 an dem Führungselement 15 wieder lösbar zu arretieren.

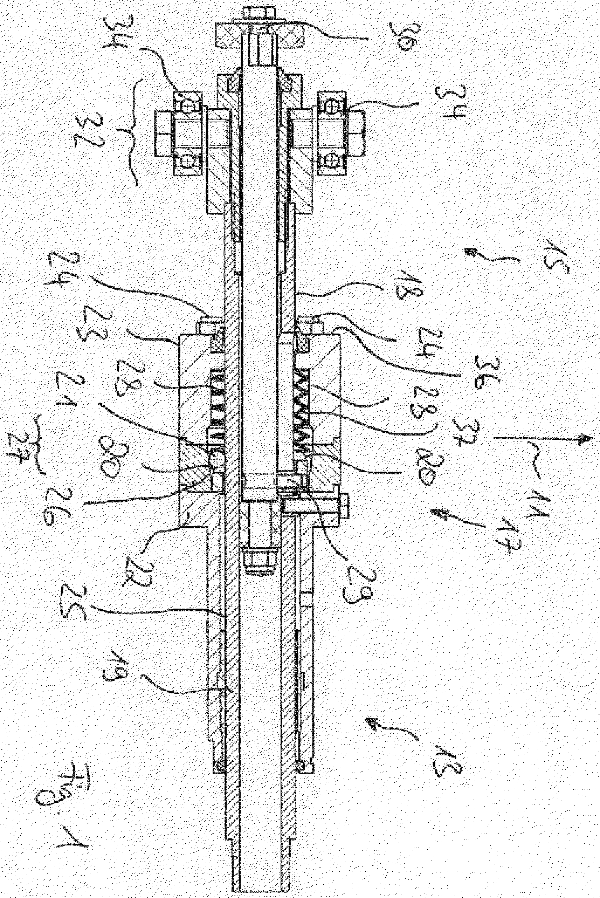

Wie in Figur 1 gezeigt umfasst die Selbsthalteeinrichtung 17 einen Hohlzylinder 18 sowie einen durch den Hohlzylinder 18 geführten Innenzylinder 19. Der Hohlzylinder 18 ist an dem Führungselement 15 angeordnet bzw. ist Bestandteil des Führungselements 15. Der Innenzylinder 19 ist an dem Halteelement 13 angeordnet bzw. bildet einen Teil davon. Der Hohlzylinder 18 umfasst mindestens einen Aufnahmeraum 20, der zur Aufnahme von mindestens einem Sperrelement 21 ausgebildet und eingerichtet ist. Der Hohlzylinder 18 ist beispielsweise - wie in der Zeichnung gezeigt - im Bereich des Aufnahmeraumes 20 geweitet, weist also gegenüber den anderen Abschnitten einen entsprechend größeren Durchmesser auf. Der Aufnahmeraum 20 kann alternativ auch durch ein separates Gehäuse gebildet werden, dass an dem Hohlzylinder 18 angeordnet ist. Vorzugsweise ist der Hohlzylinder 18 aufnahmeraumseitig geweitet und bildet einen Gehäusesitz 22 auf dem ein zylindrisches, den Aufnahmeraum 20 umschließendes Gehäuse 23 angeordnet ist. Das Gehäuse 23 ist optional mittels Schrauben 24, die durch eine Kopfseite 36 des Gehäuses 23 geführt sind, mit dem Gehäusesitz 22 verschraubt.

Die Sperrelemente 21 gelangen in der Sperrposition mit dem Innenzylinder 19 reibschlüssig in Eingriff. Wie in Figur 1 erkennbar ist, werden diese bei einer Abwärtsbewegung des Innenzylinders 19 aufgrund des Reibkontaktes mit dem Innenzylinder 19 in Richtung des Halteelementes 13 mitbewegt und kommen in dem Aufnahmeraum 20 halteelementseitig zu liegen um in der Sperrposition mit dem Innenzylinder 19 und dem Hohlzylinder 20 einen Klemmverbund zu bilden.

Insbesondere ist die Innengeometrie des Aufnahmeraum 20 derart eingerichtet, dass die Sperrelemente 21 sich ausschließlich in Axialrichtung bewegen. Die Sperrelemente 21 sind also vorzugsweise in dem Aufnahmeraum 20 derart angeordnet, dass diese radialbewegungsfrei eingerichtet sind. Weiter bevorzugt sind die Geometrie des Aufnahmeraumes 20 sowie die Anordnung der Sperrelemente 21 darin derart eingerichtet, dass die Sperrelemente 21 in der Sperrposition mit dem Innenzylinder 19 in Reibschluss gelangen, sodass der Innenzylinder 19 über die Sperrelemente 21 mit dem Hohlzylinder 18 reibschlüssig lösbar verbunden ist. Auf diese Weise wird das Halteelement 13 an dem Führungselement 15 lösbar arretiert.

Wie in der Zeichnung gezeigt, ist der Aufnahmeraum 20 bevorzugt als Ringraum zur Aufnahme einer Mehrzahl der Sperrelemente 21 ausgebildet. Die Sperrelemente 21 sind zwischen der Außenfläche 25 des Innenzylinders 19 und der Innenfläche 26 des Hohlzylinder 18 spielfrei, insbesondere radialspielfrei, angeordnet. Dies bewirkt, dass die Sperrelemente 21 mit dem Innenzylinder 19 derart in Anlagekontakt stehen, dass bei einer Relativbewegung des Halteelements 13 in Abwärtsrichtung der genannte Reibschluss zustande kommt und das Halteelement 13 in seiner Sperrposition wieder lösbar an den Führungselement 15 arretiert wird. Bevorzugt sind die Sperrelemente 21 kugelförmig ausgebildet.

Vorzugsweise ist, wie in Figur 1 ersichtlich, der Aufnahmeraum 20 in der Abwärtsrichtung sich verjüngend ausgebildet. Der Aufnahmeraum 20 weist also einen konischen Bereich 27 auf. Der Innendurchmesser der Hohlzylinders 18 verringert sich in Richtung des Gehäusesitzes 22 bzw. in Richtung des Innenzylinders 19 soweit, dass die Sperrelemente 21 in der Sperrposition eine hinreichende Klemmkraft entwickeln, um die Arretierung des Halteelements 13 an dem Führungselement 15 sicherzustellen.

Die Sperrelemente 21 gelangen so durch eine Abwärtsbewegung des Halteelements 13 in die Sperrposition hinein in eine Klemmstellung bzw. den genannten Klemmverbund. In dieser sind die Reibungskräfte zwischen dem Innenzylinder 19, den Sperrelementen 21 und dem Hohlzylinder 18 hinreichend groß, um die vorgenannten Bauteile miteinander zu arretieren und so gegen eine etwaige weitere Relativbewegung zueinander zu sichern.

Durch den konischen Bereich 27 des Aufnahmeraumes 20 werden die Sperrelemente 21 mit steigender Gewichtskraft der an den Halteelementen 13 angeordneten Artikel ebenfalls mit einer größer Anpresskraft gegen die Außenfläche 25 des Innenzylinders 19 gedrückt. So steigt mit größer werdender Gewichtskraft der Artikel, folglich auch die auf die Außenflächen 25 des Innenzylinders 19 wirkende Anpresskraft mit der Folge eines größeren Reibschlusses. Dies unterstützt die Selbstarretierungsfunktion der erfindungsgemäßen Selbsthalteeinrichtung 17 zusätzlich. Um die beschriebene Arretierfunktion zu gewährleisten ist es nicht zwingend erforderlich, den Aufnahmeraum 20 mit einem konischen Bereich 27 auszustatten. Wie zuvor beschrieben kommt der Klemm-Verbund auch dann zustande, wenn die Sperrelemente 21 in dem halteelementseitigen Ende des Aufnahmeraums 20 zu liegen kommen. Jedoch unterstützt der konische Bereich 27 einerseits ein möglichst rasches Ansprechen der Selbsthalteeinrichtung 17 und anderseits wird hierdurch die radial wirkende Klemmkraftkomponente gegenüber einer Lösung ohne konischen Bereich 27 deutlich erhöht und damit die Klemm- und Arretierwirkung deutlich verbessert.

Vorzugsweise ist in dem Aufnahmeraum 20 mindestens eine Federelement 28 angeordnet und eingerichtet, das Sperrelement 21 in der Abwärtsrichtung, also zum halteelementseitigen Ende des Aufnahmeraumes 21 hin, mit einer Federkraft zu beaufschlagen. Vorteilhafter Weise wird so das Sperrelemente 21 - neben der schon auf diese wirkenden Schwerkraft - unter steter Federkraftbeaufschlagung in Abwärtsrichtung gedrückt, so dass diese sich stets in vorspannungsbeaufschlagter Kontaktanlage mit dem Innenzylinder 19 befinden und kein Radialspiel aufweisen. Das Sperrelement 21 gelangt so unmittelbar bei einer Abwärtsbewegung des Halteelementes 13 relativ zu dem Führungselement 15 in Reibschluss, um beide in der Sperrposition miteinander zu arretieren. Weiter bevorzugt sind in dem Aufnahmeraum 21 mehrere der Sperrelemente 21 angeordnet. In diesem Fall ist jedem der Sperrelemente 21 ein es der Federelement 28 zugeordnet.

Wie in Figur 1 gezeigt ist in dem Aufnahmeraum 20 unterhalb der Sperrelemente 21, also halteelementseitig, eine Schiebehülse 29 um den Innenzylinder 19 beweglich angeordnet. Die Schiebehülse 29 ist mittels eines Betätigungselements 30 in Längsrichtung des Innenzylinders 19 translatorisch bewegbar eingerichtet und ausgebildet, um das oder die Sperrelement(e) 21 aus dem Reibschluss der Sperrposition in Längsrichtung zu bewegen. Dies bietet den Vorteil, dass durch Anheben des Betätigungselements 30 bzw. Bewegen des Betätigungselements 30 von dem Halteelement 13 entgegen der Schwerkraft weg die Schiebehülse 29 aufwärts bewegt wird und so die Sperrelemente 21 ebenfalls in Längsaxialrichtung angehoben werden. Es kommt so zur Aufhebung des in der Sperrposition bestehende Reibschlusses und die Arretierung des Halteelements 13 an dem Führungselement 15 wird gelöst. Das Betätigungselement 30 ist im Zusammenwirken mit der Schiebehülse 29 daher eingerichtet, das Halteelement 13 an dem Führungselement 15 sowohl steuervariabel zu lösen, als auch steuervariabel zu arretieren.

Wie in Figur 4 gezeigt sind die Stellmittel bevorzugt als schwenkbewegliche Gleitflächenelemente 31 ausgebildet. Damit sind diese eingerichtet, die Halteelemente 13 aus einer Wartestellung in eine Hebestellung steuerbar anzuheben. Hierzu sind die Gleitflächenelemente 31 derart ausgebildet, dass diese mit den Halteelementen 13 in Eingriff gelangen. In Abhängigkeit ihrer jeweiligen Schwenkposition verweilen die Halteelemente 13 sodann auf ihrem jeweiligen Höhenniveau oder durch werden durch die jeweilige Schwenkstellung der Gleitflächenelemente 31 aus der Wartestellung in die Hebestellung angehoben. Dies bietet den Vorteil, dass die jeweilige Höhenlage der Halteelemente 13 beim Passieren des jeweiligen Gleitflächenelements 31 steuervariabel veränderbar eingerichtet ist.

Wie in Figur 1 gut zu sehen ist, ist am oberen freien Ende des Halteelements 13 ein Steuerkopf 32 angeordnet. Dieser ist ausgebildet, mit den Gleitflächenelementen 31 in Führungsanlage zu kommen. In der Figur 4 ist gezeigt, dass die Gleitflächenelemente 31 vorzugsweise so ausgebildet sind, dass diese zwei paarige Gleitflächen 33 umfassen, die sich entlang der Förderstrecke 10 in Transportrichtung 11 erstrecken. Die Gleitflächen 33 sind weiter bevorzugt so voneinander beanstandet, dass das Führungselement 15 während des Fördervorgangs zwischen diesen hindurchgreift und der Steuerkopf 32 auf den Gleitflächen 33 jeweils seitlich aufliegt.

Durch Verschwenken der in Figur 4 gezeigten Gleitflächenelemente 31 und der damit verbundenen Änderung der Winkellage der Gleitflächen 33, wird die zuvor beschriebene Höhenverstellung der Halteelemente 13 bewirkt. Die Breite des Steuerkopfes 32 ist vorzugsweise größer als der kleinste Abstand zwischen den beiden Gleitflächen 33 gewählt. Der Steuerkopf 32 ist also vorzugsweise so eingerichtet, dass dieser die Gleitflächen 33 zumindest teilweise übergreift und entsprechend auf den Gleitflächen 33 beidseitig aufliegt.

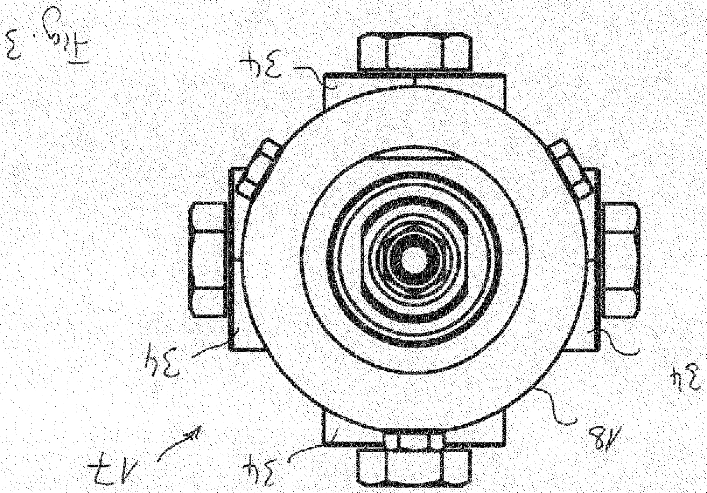

In der Figur 1 sind vorteilhafterweise an dem Steuerkopf 32 jeweils an gegenüberliegenden Seiten paarig angeordnete Kugellager 34 gezeigt. Diese sind eingerichtet, über die Gleitflächen 33 zu rollen. Figur 3 zeigt eine bevorzugte Ausführungsform bei der der Steuerkopf 32 vier der genannten Kugellager 34 umfasst. Diese sind jeweils um 90° versetzt an den Seiten des Steuerkopfes 32 angeordnet. Der Steuerkopf 32 damit in 90°-Schritten um die Längsachse verschwenkbar ausgebildet und eingerichtet, in dem das Führungselement 15 um die Längsachse verschwenkt wird. So können die Artikel bei der Bearbeitung um die Längsachse gedreht in eine für die jeweilige Bearbeitung günstige Position gebracht werden.

Die Stellmittel umfassen vorzugweise weitere Steuermittel 35, die zum Absenken der Halteelemente 13 aus der Hebestellung in die Wartestellung eingerichtet sind. Diese Steuermittel 35 sind so an der Förderstrecke 10 positioniert und eingerichtet, dass sie dabei mit dem Betätigungselement 30 zum Lösen der Sperrelemente 21 in Eingriff gelangen. Anders ausgedrückt sind die Steuermittel 35 eingerichtet, auf das Betätigungselement 30 über den Steuerkopf 32 derart einzuwirken, dass die Arretierung zwischen dem Halteelement 13 dem Führungselement 15 gelöst wird, sodass sich diese in der Längsachse quer zur Förderrichtung 12 frei relativ zueinander bewegen können. Auf diese Weise lassen sich die Halteelemente 13 - wie zuvor beschrieben - absenken.

Figur 4 zeigt schematisch die erfindungsgemäße Anordnung, die die zuvor beschriebene Vorrichtung zum Fördern der genannten Artikel, sowie mindestens eine - in der Zeichnung nicht gezeigte - zur Bearbeitung der Artikel ausgebildete Bearbeitungsstation umfasst. Wie zuvor beschrieben, ist die erfindungsgemäße Vorrichtung eingerichtet, die Höhenlage der Artikel gemäß der jeweils zur Bearbeitung der Artikel mittels der mindestens einen Bearbeitungsstation vorgegebene Bearbeitungshöhe während des Förderns einzustellen, um die Höhenlage der zu bearbeitenden Artikel automatisch während des Fördervorgangs an die Gegebenheiten der jeweiligen Bearbeitungsstation optimal anzupassen. Wie in Figur 4 gezeigt, umfasst die erfindungsgemäße Anordnung die Förderstrecke 10, die durch die Fördereinrichtung 12 gebildet wird. Die Fördereinrichtung 12 umfasst eine Mehrzahl der Halteelemente 13, an denen - in der Figur 4 beispielhaft gezeigt, jeweils ein Geflügelbein 38 haltend angeordnet ist. In Figur 4 sind auch die Führungselement 15 erkennbar, die in der Transportrichtung 11 zu dem Steuermittel 35 gefördert werden.

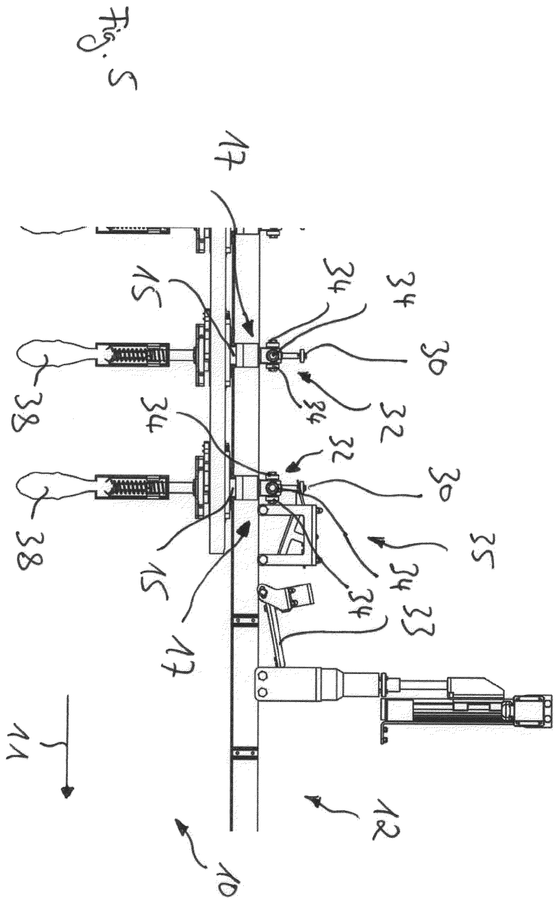

Figur 5 zeigt eine Seitenansicht der in Figur 4 gezeigten erfindungsgemäßen Anordnung mit der Förderstrecke 10, die durch die Fördereinrichtung 12 gebildet wird. Die Fördereinrichtung 12 umfasst eine Mehrzahl der Halteelemente 13, von denen in der Figur 5 zwei gezeigt sind. An jedem dieser Halteelemente 13 ist jeweils eines der Geflügelbein 38 haltend angeordnet. Jedes der Halteelemente 13 ist längsaxial steuerbeweglich an dem Führungselement 15 angeordnet. Mittels der Selbsthalteeinrichtung 17 ist das Halteelement 13 - in der zuvor beschriebenen Art - steuerbeweglich an dem Führungselement 15 angeordnet. In Figur 5 sind zudem die Steuerköpfe 32 mit den Kugellagen 34 gezeigt, die mit den Gleitflächen 33 in Wirkkontakt gelangen. Erkennbar ist auch, wie das Betätigungselement 30 mit dem Steuermittel 35 interagiert.

Vorzugsweise sind die Artikel Geflügel oder Geflügelteile. Insbesondere sind die Artikel Geflügelbeine. Die Bearbeitungsstation ist dementsprechend vorzugsweise als Entbeinungsstation ausgebildet und eingerichtet.

Das erfindungsgemäße Verfahren zum Fördern der genannten Artikel wird im Folgenden nur zu ausgewählten Aspekten näher beschrieben, da sich die Verfahrensschritte größtenteils bereits im Zusammenhang mit der erfindungsgemäßen Vorrichtung beschrieben worden sind.

Wie zuvor beschrieben erfolgt das Freigeben der Bewegbarkeit des Halteelements 13 relativ zu dem Führungselement 15 in Aufwärtsrichtung entgegen der Schwerkraft einerseits und lösbares Arretieren jedes der Halteelemente 13 an dem jeweiligen Führungselement 15 in einer Sperrposition in Abwärtsrichtung mittels der Selbsthalteeinrichtung 17.

Das Freigeben und lösbare Arretieren der Halteelemente 13 an dem jeweiligen Führungselement 15 mittels der Selbsthalteeinrichtung 17 führt dazu, dass das Halteelement 13 bei einer Abwärtsbewegung selbsttätig an dem Führungselement 15 in einer definierten unteren Position, nämlich der Sperrposition, mit dem Führungselement 15 arretiert wird. Wird hingegen das Halteelement 13 in Aufwärtsrichtung mittels der Stellmittel angehoben, so wird das Halteelement 13 aus der Sperrposition gelöst und kann sich nun relativ zu dem Führungselement 15 in jede gewünschte Höhenlage frei bewegen. Die Verstellung der Höhenlage der geförderten Artikel erfolgt also mittels der Stellmittel so, dass ausschließlich in Axialrichtung auf die Halteelemente 13 eingewirkt wird

In solchen Bereichen, in denen keine Stellmittel zum Anheben der Halteelemente 13 angeordnet sind, bewegt sich das Halteelement 13 unter Schwerkrafteinwirkung in Abwärtsrichtung und gelangt so automatisch in die Sperrposition. In dieser wird es mittels der Selbsthalteeinrichtung 17 an dem Führungselement 15 lösbar arretiert. So ist eine Höhenverstellung mit den ausschließlich in Axialrichtung wirkenden Stellmitteln möglich.

Der reibschlüssige Eingriff bzw. der zuvor beschriebene Klemmverbund wird vorzugsweise durch eine Mehrzahl der in dem als Ringraum ausgebildeten Aufnahmeraum 20 angeordneten Sperrelemente 21 bewirkt. Vorteilhafterweise bewegen sich die Sperrelemente 21 hierzu zwischen der Außenfläche 25 des Innenzylinders 19 und der Innenfläche 26 des Hohlzylinders 18 spielfrei, insbesondere radialspielfrei. Die Sperrelemente 21 sind also mit dem Innenzylinder 19 derart in Anlagekontakt, dass bei einer Relativbewegung der Halteelemente 13 in Abwärtsrichtung der genannte Reibschluss zustande kommt und das Halteelement 13 in seiner Sperrposition wieder lösbar an den Führungselement 15 arretiert wird.

Der reibschlüssige Eingriff bzw. die Bildung des beschriebenen Klemmverbunds in der Sperrposition wird durch Klemmen der Sperrelemente 21 in dem Aufnahmeraum 20, der sich in der Abwärtsrichtung verjüngt bzw. einen konischen Bereich 27 aufweist, unterstützend bewirkt. Die Sperrelemente 21 gelangen so durch eine Abwärtsbewegung der Halteelemente 13 in der Sperrposition in eine entsprechende Klemmstellung. In dieser Klemmstellung sind die Reibungskräfte zwischen dem Innenzylinder 19, den Sperrelementen 21 und dem Hohlzylinder 18 hinreichend groß, um die vorgenannten Bauteile gegen eine weitere Relativbewegung zueinander in einem Klemmsitz zu überführen und miteinander zu arretieren.

Wie zuvor beschrieben wird durch Beaufschlagen der Sperrelemente 21 in der Abwärtsrichtung mit einer Federkraft mittels mindestens einem in dem Aufnahmeraum angeordneten Federelement 28 die Sperrelemente 21 - neben der schon auf diese wirkenden Schwerkraft - unter steter Federkraftbeaufschlagung in Abwärtsrichtung gedrückt, so dass diese sich stets in vorspannungsbeaufschlagter Kontaktanlage mit dem Innenrohr 19 befinden und daher kein Radialspiel aufweisen. Hierdurch wird sichergestellt, dass die Sperrelemente 21 unmittelbar bei einer Abwärtsbewegung des Halteelements 13 in Reibschluss gelangen und das Halteelement 13 in der Sperrposition an dem Führungselement 15 arretieren.

Gemäß dem erfindungsgemäßen Verfahren erfolgt das Lösen der Sperrelemente 21 aus dem Reibschlusseingriff bzw. dem Klemmverbund in der Sperrposition vorzugsweise mittels einer in dem Aufnahmeraum 20 unterhalb der Sperrelemente 21 um den Innenzylinder 19 angeordneten Schiebehülse 29. Die Schiebehülse 29 wird hierzu in Längsrichtung des Innenzylinders 19 mittels eine Betätigungselements 30 translatorisch entgegen der Gewichtskraft des Artikels, also aufwärts, bewegt. Durch dieses Anheben des Betätigungselements 30 entgegen der Schwerkraftrichtung wird so die Schiebehülse 29 aufwärts bewegt und die Sperrelemente 21 ebenfalls in Längsaxialrichtung angehoben. Hierdurch wird der in der Sperrposition bestehende Reibschluss bzw. Klemmverbund aufgehoben und die Arretierung des Halteelementes 13 an dem Führungselement 15 gelöst. Durch Verstellen des Betätigungselements 30 wird daher sowohl ein steuervariables Lösen, als auch ein steuervariables Arretieren des Halteelements 13 an dem Führungselement 15 möglich.

Das Anheben der Halteelemente 13 aus einer Wartestellung in eine Hebestellung wird durch steuerbares Schwenken der als schwenkbewegliche Gleitflächenelemente 31 ausgebildeten Stellelemente bewirkt. Durch Verschwenken des Neigungswinkels der Gleitflächenelemente 31 ist es möglich, die Höhenlage automatisch an die jeweils gewünschte Höhe steuervariabel anzupassen.

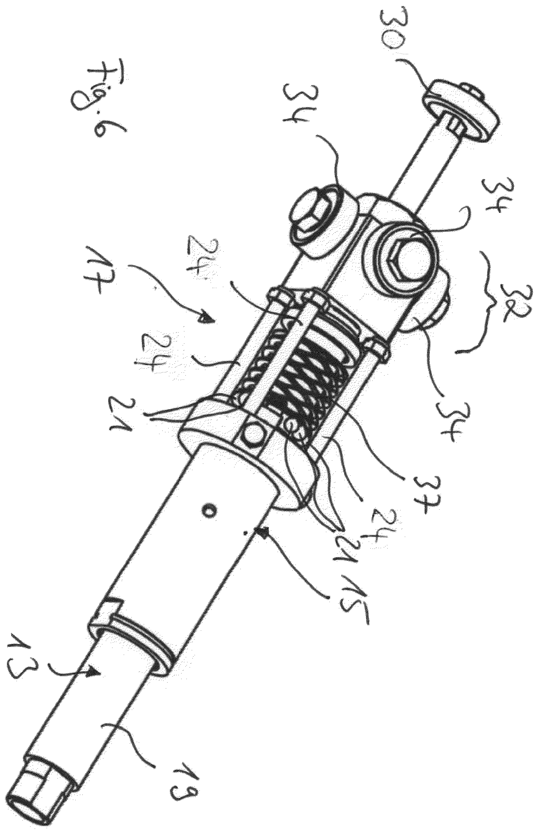

Figur 6 zeigt eine perspektivische Ansicht der Halteelemente 13 sowie der Führungselement 15. Die Selbsthalteeinrichtung 17 ist mit ausgeblendetem Gehäuse dargestellt, so dass der Blick auf das Federelement 37 und die Sperrelemente 21 frei ist. Am unteren Ende ist der Innenzylinder 19 des Halteelements 13 erkennbar, der in das Führungselement 15 eintaucht. Das obere Ende des Führungselements 15 umfasst das Betätigungselement 30 sowie den Steuerkopf 32 mit den Kugellagern 34.

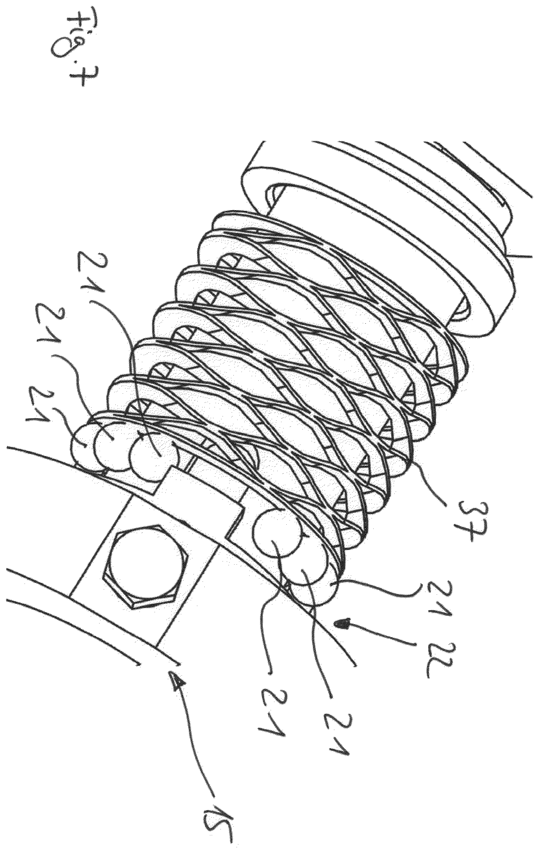

Figur 7 zeigt eine vergrößerte Darstellung eines Ausschnitts der Fig. 6 mit Blick auf das Federelement 37. Das Federelement 37 steht in Wirkverbindung mit den Sperrelementen 21, die von diesem unter Federvorspannung in Richtung des Gehäusesitzes 22 gedrückt werden. Das Federelement 37 ist bevorzugt - wie in der Zeichnung gezeigt - als Wellenfederelement ausgebildet und eingerichtet. Das Federelement 37 weist hierzu die in den Figuren 6 und 7 gezeigte wabenartige zylindrische Federstruktur auf. Die Ausführung als Wellenfederelement bietet den Vorteil der Bereitstellung einer möglichst gleichmäßigen Federkraft auf die über den Umfang verteilt angeordneten Sperrelemente 21. Das Federelement 37 kann alternativ auch als Spiral-Druck-Feder ausgebildet sein.

Die vorliegende Erfindung umfasst auch das eingangs genannte Verfahren zur Bearbeitung von Artikeln der lebensmittelverarbeitenden Industrie, wobei diese die zuvor beschriebenen Schritte des Verfahrens zur Förderung von Artikeln der lebensmittelverarbeitenden Industrie umfasst und weiter das Bearbeiten der Artikel mittels mindestens einen - in der Zeichnung nicht gezeigten - Bearbeitungsstation umfasst. Dabei wird die Höhenlage der Artikel gemäß der jeweils zur Bearbeitung der Artikel mittels der mindestens einen Bearbeitungsstation vorgegebene Bearbeitungshöhe während des Förderns eingestellt.

## Patentansprüche

1. Vorrichtung zum Fördern von Artikeln der lebensmittelverarbeitenden Industrie, umfassend
eine zum Fördern der Artikel entlang einer Förderstrecke (10) in Transportrichtung (11) eingerichtete Fördereinrichtung (12) mit einer Mehrzahl von zur Aufnahme der Artikel eingerichteten Halteelementen (13),
mindestens eine sich in der Transportrichtung (11) erstreckende Führung (14), die eingerichtet ist, an dieser in der Transportrichtung (11) bewegbar angeordnete Führungselemente (15) zu führen, wobei an jedem der Führungselemente (15) eines der Halteelemente (13) höhenverstellbar angeordnet ist,
an der Förderstrecke (10) angeordnete und zum Verstellen der jeweiligen Höhenlage der Halteelemente (13) relativ zu dem jeweiligen Führungselement (15) eingerichtete steuerbare Stellmittel , wobei die Stellmittel ausgebildet sind, beim Passieren der Halteelemente (13) steuerbar mit diesen in Verstelleingriff zur Verstellung der jeweiligen Höhenlage des Halteelements (13) zu gelangen,
**dadurch gekennzeichnet, dass**
jedes der Halteelemente (13) an dem jeweiligen der Führungselemente (15) mittels einer Selbsthalteinrichtung (17) angeordnet ist, die derart ausgebildet ist, dass das Halteelement (13) relativ zu dem Führungselement (15) in Aufwärtsrichtung entgegen der Schwerkraft beweglich ist und in Abwärtsrichtung das Halteelement (13) an dem Führungselement (15) in einer Sperrposition lösbar arretiert ist.

2. Vorrichtung nach Anspruch 1, **dadurch gekennzeichnet, dass** die Selbsthalteeinrichtung (17) einen Hohlzylinder (18) sowie einen durch den Hohlzylinder (18) geführten Innenzylinder (19) umfasst, wobei der Hohlzylinder (18) an dem Führungselement (15) angeordnet ist und der Innenzylinder (19) an dem Halteelement (13) angeordnet ist, und wobei der Hohlzylinder (18) mindestens einen Aufnahmeraum (20) zur Aufnahme von mindestens einem Sperrelement (21) umfasst, die eingerichtet sind, in der Sperrposition mit dem Innenzylinder (19) reibschlüssig in Eingriff zu gelangen.

3. Vorrichtung nach Anspruch 2, **dadurch gekennzeichnet, dass** der Aufnahmeraum (20) als Ringraum zur Aufnahme einer Mehrzahl der Sperrelemente (21) ausgebildet ist.

4. Vorrichtung nach Anspruch 3, **dadurch gekennzeichnet, dass** die Sperrelemente (21) kugelförmig ausgebildet sind.

5. Vorrichtung nach einem der Ansprüche 2 bis 4, **dadurch gekennzeichnet, dass** der Aufnahmeraum (20) in der Abwärtsrichtung sich verjüngend ausgebildet ist.

6. Vorrichtung nach einem der Ansprüche 2 bis 5, **dadurch gekennzeichnet, dass** in dem Aufnahmeraum (20) mindestens eine Federelement (28) angeordnet ist, das eingerichtet ist, die Sperrelemente (21) in der Abwärtsrichtung mit einer Federkraft zu beaufschlagen.

7. Vorrichtung nach einem der Ansprüche 2 bis 6, **dadurch gekennzeichnet, dass** in dem Aufnahmeraum (20) unterhalb der Sperrelemente (21) eine Schiebehülse (29) um den Innenzylinder (19) angeordnet ist, die mittels eines Betätigungselements (30) zum Lösen der Sperrelemente (21) aus dem Reibschlusseingriff in der Sperrposition in Längsrichtung des Innenzylinders (19) bewegbar eingerichtet ist.

8. Vorrichtung nach einem der Ansprüche 2 bis 7, **dadurch gekennzeichnet, dass** die Stellmittel als schwenkbewegliche Gleitflächenelemente (31) ausgebildet sind, die zum Anheben der Halteelemente (13) aus einer Wartestellung in eine Hebestellung steuerbar schwenkbar eingerichtet sind.

9. Vorrichtung nach Anspruch 8, **dadurch gekennzeichnet, dass** am oberen freien Ende des Führungselements (15) einen Steuerkopf (32) angeordnet ist, der ausgebildet ist, mit den Gleitflächenelementen (31) in Führungsanlage zu kommen.

10. Vorrichtung nach einem der Ansprüche 8 oder 9, **dadurch gekennzeichnet, dass** die Stellmittel weiter Steuermittel (35) umfassen, die eingerichtet sind, zum Absenken der Halteelemente (13) aus der Hebestellung in die Wartestellung mit dem Betätigungselement (30) zum Lösen der Sperrelemente (21) in Eingriff zu gelangen.

11. Anordnung zur Bearbeitung von Artikeln der lebensmittelverarbeitenden Industrie, umfassend eine Vorrichtung zur Förderung der Artikel nach einem der Ansprüche 1 bis 10 und weiter umfassend mindestens eine zur Bearbeitung der Artikel ausgebildete Bearbeitungsstation, wobei die Vorrichtung eingerichtet ist, die Höhenlage der Artikel gemäß der jeweils zur Bearbeitung der Artikel mittels der mindestens einen Bearbeitungsstation vorgegebene Bearbeitungshöhe während des Förderns einzustellen.

12. Anordnung nach Anspruch 11, **dadurch gekennzeichnet, dass** die Artikel Geflügel oder Geflügelteile sind.

13. Verfahren zum Fördern von Artikeln der lebensmittelverarbeitenden Industrie, umfassend
Fördern der Artikel entlang einer Förderstrecke (10) in Transportrichtung (11) mittels einer Fördereinrichtung (12) mit einer Mehrzahl von zur Aufnahme der Artikel eingerichteten Halteelementen (13),
Führen von Führungselementen (15) mittels mindestens einer sich in der Transportrichtung (11) erstreckende Führung (14), wobei die Führungselemente (15) in der Transportrichtung (11) beweglich angeordnet sind, und wobei an jedem der Führungselemente (15) eines der Halteelemente (13) höhenverstellbar angeordnet ist,
steuerbares Verstellen der jeweiligen Höhenlage der Halteelemente (13) mittels an der Förderstrecke (10) angeordneten und zum Verstellen der jeweiligen Höhenlage der Halteelemente (13) relativ zu dem jeweiligen Führungselement (15) eingerichteten steuerbaren Stellmitteln, wobei die Stellmittel beim Passieren der Halteelemente (13) steuerbar mit diesen in Verstelleingriff zur Verstellung der jeweiligen Höhenlage des Halteelements (13) gelangen,
**gekennzeichnet durch**
Freigeben der Bewegbarkeit des Halteelements (13) relativ zu dem Führungselement (15) in Aufwärtsrichtung entgegen der Schwerkraft und lösbares Arretieren jedes der Halteelemente (13) an dem jeweiligen Führungselement (15) in einer Sperrposition in Abwärtsrichtung mittels einer Selbsthalteeinrichtung (17).

14. Verfahren nach Anspruch 13, **dadurch gekennzeichnet, dass** die Selbsthalteeinrichtung (17) einen Hohlzylinder (18) sowie einen durch den Hohlzylinder (18) geführten Innenzylinder (19) umfasst, wobei der Hohlzylinder (18) an dem Führungselement (15) angeordnet ist und der Innenzylinder (19) an dem Halteelement (13) angeordnet ist, und wobei der Hohlzylinder (18) mindestens einen Aufnahmeraum (20) zur Aufnahme von mindestens einem Sperrelement (21) umfasst, und die Sperrelemente (21) in der Sperrposition mit dem Innenzylinder reibschlüssig in Eingriff gelangen.

15. Verfahren nach Anspruch 14, **dadurch gekennzeichnet, dass** der reibschlüssige Eingriff durch eine Mehrzahl der in dem als Ringraum ausgebildeten Aufnahmeraum (20) angeordneten Sperrelemente (21) erfolgt.

16. Verfahren nach Anspruch 15, **dadurch gekennzeichnet, dass** als Sperrelemente (21) Kugeln verwendet werden.

17. Verfahren nach einem der Ansprüche 14 bis 16, **gekennzeichnet durch** Bewirken des reibschlüssigen Eingriffs in der Sperrposition durch Klemmen der Sperrelemente (21) in dem Aufnahmeraum (20), der sich in der Abwärtsrichtung verjüngt.

18. Verfahren nach einem der Ansprüche 14 bis 17, **gekennzeichnet durch** Beaufschlagen der Sperrelemente (21) in der Abwärtsrichtung mit einer Federkraft mittels mindestens einem in dem Aufnahmeraum (20) angeordneten Federelement (28).

19. Verfahren nach einem der Ansprüche 14 bis 18, **gekennzeichnet durch** Lösen der Sperrelemente (21) aus dem Reibschlusseingriff in der Sperrposition mittels einer in dem Aufnahmeraum (20) unterhalb der Sperrelemente (21) um den Innenzylinder (19) angeordneten Schiebehülse (29) durch Bewegen der Schiebehülse (2) in Längsrichtung des Innenzylinders (19) mittels eine Betätigungselements (30).

20. Verfahren nach einem der Ansprüche 14 bis 19, **gekennzeichnet durch** Anheben der Halteelemente (13) aus einer Wartestellung in eine Hebestellung durch steuerbares Schwenken der als schwenkbewegliche Gleitflächenelemente (31) ausgebildeten Sperrelemente (21).

21. Verfahren nach Anspruch 20, **gekennzeichnet durch** in Führungsanlagebringen der Gleitflächenelemente (31) mit einem am oberen freien Ende des Führungselements (15) angeordneten Steuerkopf (32).

22. Verfahren nach einem der Ansprüche 20 oder 21, **gekennzeichnet durch** Eingriff von Stellmitteln (16) mit dem Betätigungselement (30) zum Lösen der Sperrelemente (21) und Absenken der Halteelemente (13) aus der Hebestellung in die Wartestellung.

23. Verfahren zur Bearbeitung von Artikeln der lebensmittelverarbeitenden Industrie, umfassend ein Verfahren zur Förderung der Artikel nach einem der Ansprüche 13 bis 22 weiter umfassend das Bearbeiten der Artikel mittels mindestens einer Bearbeitungsstation, wobei die Höhenlage der Artikel gemäß der jeweils zur Bearbeitung der Artikel mittels der mindestens einen Bearbeitungsstation vorgegebene Bearbeitungshöhe während des Förderns eingestellt wird.

24. Verfahren nach Anspruch 23, **dadurch gekennzeichnet, dass** die Artikel Geflügel oder Geflügelteile sind.

## Claims

1. Apparatus for conveying articles of the food-processing industry, comprising
a conveying device (12) adapted for conveying the articles along a conveying line (10) in a transport direction (11) and having a plurality of holding elements (13) adapted for receiving the articles,
at least one guide (14) extending in the transport direction (11), which guide is adapted for guiding guide elements (15) arranged thereon so as to be movable in the transport direction (11), wherein one of the holding elements (13) is arranged on each of the guide elements (15) so as to be adjustable in height,
controllable adjusting means arranged on the conveying line (10) and adapted for adjusting the height position of the holding elements (13) relative to the respective guide element (15), wherein the adjusting means are configured to come into adjusting engagement in a controllable manner with the holding elements (13) as they pass in order to adjust the respective height position of the holding element (13),
**characterised in that**
each of the holding elements (13) is arranged on the respective one of the guide elements (15) by means of a self-holding device (17) which is so configured that the holding element (13) is movable relative to the guide element (15) in the upward direction against the force of gravity and in the downward direction the holding element (13) is releasably locked on the guide element (15) in a stop position.

2. Apparatus according to claim 1, **characterised in that** the self-holding device (17) comprises a hollow cylinder (18) and an inner cylinder (19) guided through the hollow cylinder (18), wherein the hollow cylinder (18) is arranged on the guide element (15) and the inner cylinder (19) is arranged on the holding element (13), and wherein the hollow cylinder (18) comprises at least one receiving space (20) for receiving at least one stop element (21), which are adapted to come into frictional engagement with the inner cylinder (19) in the stop position.

3. Apparatus according to claim 2, **characterised in that** the receiving space (20) is in the form of an annular space for receiving a plurality of stop elements (21).

4. Apparatus according to claim 3, **characterised in that** the stop elements (21) are spherical.

5. Apparatus according to any one of claims 2 to 4, **characterised in that** the receiving space (20) is configured to taper in the downward direction.

6. Apparatus according to any one of claims 2 to 5, **characterised in that** at least one spring element (28) is arranged in the receiving space (20), which spring element is adapted for applying a spring force to the stop elements (21) in the downward direction.

7. Apparatus according to any one of claims 2 to 6, **characterised in that** a sliding sleeve (29) is arranged around the inner cylinder (19) in the receiving space (20) beneath the stop elements (21), which sliding sleeve is adapted to be movable in the stop position in the longitudinal direction of the inner cylinder (19) by means of an actuating element (30) in order to release the stop elements (21) from frictional engagement.

8. Apparatus according to any one of claims 1 to 7, **characterised in that** the adjusting means are in the form of pivotable sliding surface elements (31) which are adapted to be controllably pivotable for lifting the holding elements (13) from a standby position into a lifted position.

9. Apparatus according to claim 8, **characterised in that** a control head (32) is arranged at the upper free end of the guide element (15), which control head is configured to come into guiding contact with the sliding surface elements (31).

10. Apparatus according to either claim 8 or claim 9, **characterised in that** the adjusting means further comprise control means (35) which are adapted, for lowering the holding elements (13) from the lifted position into the standby position, to come into engagement with the actuating element (30) in order to release the stop elements(21).

11. Assembly for processing articles of the food-processing industry, comprising an apparatus for conveying the articles according to any one of claims 1 to 10 and further comprising at least one processing station configured for processing the articles, wherein the apparatus is adapted for adjusting the height position of the articles during conveying in accordance with the processing height specified for processing of the articles by means of the at least one processing station.

12. Assembly according to claim 11, **characterised in that** the articles are poultry or poultry parts.

13. Method for conveying articles of the food-processing industry, comprising
conveying the articles along a conveying line (10) in a transport direction (11) by means of a conveying device (12) having a plurality of holding elements (13) adapted for receiving the articles,
guiding guide elements (15) by means of at least one guide (14) extending in the transport direction (11), wherein the guide elements (15) are arranged so as to be movable in the transport direction (11), and wherein one of the holding elements (13) is arranged on each of the guide elements (15) so as to be adjustable in height,
controllably adjusting the respective height position of the holding elements (13) by means of controllable adjusting means which are arranged on the conveying line (10) and are adapted for adjusting the respective height position of the holding elements (13) relative to the respective guide element (15), wherein the adjusting means come into adjusting engagement in a controllable manner with the holding elements (13) as they pass in order to adjust the respective height position of the holding element (13),
**characterised by**
permitting the movability of the holding element (13) relative to the guide element (15) in the upward direction against the force of gravity and releasably locking each of the holding elements (13) on the respective guide element (15) in a stop position in the downward direction by means of a self-holding device (17).

14. Method according to claim 13, **characterised in that** the self-holding device (17) comprises a hollow cylinder (18) and an inner cylinder (19) guided through the hollow cylinder (18), wherein the hollow cylinder (18) is arranged on the guide element (15) and the inner cylinder (19) is arranged on the holding element (13), and wherein the hollow cylinder (18) comprises at least one receiving space (20) for receiving at least one stop element (21), and in the stop position the stop elements (21) come into frictional engagement with the inner cylinder.

15. Method according to claim 14, **characterised in that** frictional engagement is effected by a plurality of stop elements (21) arranged in the receiving space (20) in the form of an annular space.

16. Method according to claim 15, **characterised in that** spheres are used as the stop elements (21).

17. Method according to any one of claims 14 to 16, **characterised by** effecting frictional engagement in the stop position by clamping the stop elements (21) in the receiving space (20), which tapers in the downward direction.

18. Method according to any one of claims 14 to 17, **characterised by** applying a spring force to the lock elements (21) in the downward direction by means of at least one spring element (28) arranged in the receiving space (20).

19. Method according to any one of claims 14 to 18, **characterised by** releasing the stop elements (21) from frictional engagement in the stop position by means of a sliding sleeve (29) arranged around the inner cylinder (19) in the receiving space (20) beneath the stop elements (21), by moving the sliding sleeve (29) in the longitudinal direction of the inner cylinder (19) by means of an actuating element (30).

20. Method according to any one of claims 14 to 19, **characterised by** lifting the holding elements (13) from a standby position into a lifted position by controllable pivoting of the stop elements (21) in the form of pivotable sliding surface elements (31).

21. Method according to claim 20, **characterised by** bringing the sliding surface elements (31) into guiding contact with a control head (32) arranged at the upper free end of the guide element (15).

22. Method according to any one of claims 20 or 21, **characterised by** engagement of adjusting means (16) with the actuating element (30) in order to release the stop elements (21) and lower the holding elements (13) from the lifted position into the standby position.

23. Method for processing articles of the food-processing industry, comprising a method for conveying the articles according to any one of claims 13 to 22, further comprising processing the articles by means of at least one processing station, wherein the height position of the articles is adjusted during conveying in accordance with the processing height specified for processing of the articles by means of the at least one processing station.

24. Method according to claim 23, **characterised in that** the articles are poultry or poultry parts.

## Revendications

1. Dispositif pour acheminer des articles de l'industrie de transformation alimentaire, comprenant
un appareil d'acheminement (12) adapté pour acheminer les articles le long d'un parcours d'acheminement (10) dans une direction de transport (11), avec une pluralité d'éléments de retenue (13) adaptés pour recevoir les articles,
au moins un guide (14) s'étendant dans la direction de transport (11), qui est adapté pour guider sur celui-ci des éléments de guidage (15) agencés de manière déplaçable dans la direction de transport (11), l'un des éléments de retenue (13) étant agencé de manière réglable en hauteur sur chacun des éléments de guidage (15),
des moyens de réglage commandables, agencés sur le parcours d'acheminement (10) et adaptés pour régler la position en hauteur respective des éléments de retenue (13) par rapport à l'élément de guidage (15) respectif, les moyens de réglage étant configurés pour venir de manière commandée en prise de réglage avec les éléments de retenue (13) lors du passage de ceux-ci pour régler la position en hauteur respective de l'élément de retenue (13),
**caractérisé en ce que**
chacun des éléments de retenue (13) est agencé sur l'élément de guidage (15) respectif au moyen d'un appareil d'auto-retenue (17) qui est configuré de telle sorte que l'élément de retenue (13) est mobile par rapport à l'élément de guidage (15) dans la direction ascendante à l'encontre de la force de gravité et, dans la direction descendante, l'élément de retenue (13) est bloqué de manière amovible sur l'élément de guidage (15) dans une position d'arrêt.

2. Dispositif selon la revendication 1, **caractérisé en ce que** l'appareil d'auto-retenue (17) comprend un cylindre creux (18) ainsi qu'un cylindre intérieur (19) guidé à travers le cylindre creux (18), le cylindre creux (18) étant agencé sur l'élément de guidage (15) et le cylindre intérieur (19) étant agencé sur l'élément de retenue (13), et le cylindre creux (18) comprenant au moins un espace de réception (20) pour recevoir au moins un élément d'arrêt (21), qui sont adaptés pour venir en prise par friction avec le cylindre intérieur (19) dans la position d'arrêt.

3. Dispositif selon la revendication 2, **caractérisé en ce que** l'espace de réception (20) est configuré sous forme d'espace annulaire pour recevoir une pluralité des éléments d'arrêt (21).

4. Dispositif selon la revendication 3, **caractérisé en ce que** les éléments d'arrêt (21) sont configurés sous forme sphérique.

5. Dispositif selon l'une quelconque des revendications 2 à 4, **caractérisé en ce que** l'espace de réception (20) est configuré de manière à se rétrécir dans la direction descendante.

6. Dispositif selon l'une quelconque des revendications 2 à 5, **caractérisé en ce qu'**au moins un élément à ressort (28) est agencé dans l'espace de réception (20), lequel élément à ressort est adapté pour solliciter les éléments d'arrêt (21) dans la direction descendante avec une force de ressort.

7. Dispositif selon l'une quelconque des revendications 2 à 6, **caractérisé en ce qu'**un manchon coulissant (29) est agencé dans l'espace de réception (20) sous les éléments d'arrêt (21) autour du cylindre intérieur (19), lequel manchon coulissant est adapté pour pouvoir être déplacé dans la direction longitudinale du cylindre intérieur (19) au moyen d'un élément d'actionnement (30) pour libérer les éléments d'arrêt (21) de l'engagement par friction dans la position d'arrêt.

8. Dispositif selon l'une quelconque des revendications 2 à 7, **caractérisé en ce que** les moyens de réglage sont configurés sous forme d'éléments à surface de glissement mobiles en pivotement (31) qui sont adaptés pour pouvoir pivoter de manière commandable pour soulever les éléments de retenue (13) d'une position d'attente à une position de levage.

9. Dispositif selon la revendication 8, **caractérisé en ce qu'**une tête de commande (32) est agencée à l'extrémité libre supérieure de l'élément de guidage (15), laquelle tête de commande est configurée pour venir en appui de guidage avec les éléments à surface de glissement (31).

10. Dispositif selon l'une quelconque des revendications 8 ou 9, **caractérisé en ce que** les moyens de réglage comprennent en outre des moyens de commande (35) qui sont adaptés pour venir en prise avec l'élément d'actionnement (30) pour libérer les éléments d'arrêt (21) pour abaisser les éléments de retenue (13) de la position de levage à la position d'attente.

11. Agencement pour le traitement d'articles de l'industrie de transformation alimentaire, comprenant un dispositif pour l'acheminement des articles selon l'une quelconque des revendications 1 à 10 et comprenant en outre au moins un poste de traitement configuré pour le traitement des articles, le dispositif étant adapté pour régler la position en hauteur des articles pendant l'acheminement en fonction de la hauteur de traitement prédéfinie respective pour le traitement des articles au moyen de l'au moins un poste de traitement.

12. Agencement selon la revendication 11, **caractérisé en ce que** les articles sont des volailles ou des morceaux de volailles.

13. Procédé d'acheminement d'articles de l'industrie de transformation alimentaire, comprenant
l'acheminement des articles le long d'un parcours d'acheminement (10) dans la direction de transport (11) au moyen d'un appareil d'acheminement (12) avec une pluralité d'éléments de retenue (13) adaptés pour recevoir les articles,
le guidage d'éléments de guidage (15) au moyen d'au moins un guide (14) s'étendant dans la direction de transport (11), les éléments de guidage (15) étant agencés de manière mobile dans la direction de transport (11), et l'un des éléments de retenue (13) étant agencé de manière réglable en hauteur sur chacun des éléments de guidage (15),
le réglage commandable de la position en hauteur respective des éléments de retenue (13) au moyen de moyens de réglage commandables agencés sur le parcours d'acheminement (10) et adaptés pour régler la position en hauteur respective des éléments de retenue (13) par rapport à l'élément de guidage respectif (15), les moyens de réglage venant de manière commandable en prise de réglage avec les éléments de retenue (13) lors du passage de ceux-ci pour régler la position en hauteur respective de l'élément de retenue (13),
**caractérisé par**
la libération de la mobilité de l'élément de retenue (13) par rapport à l'élément de guidage (15) dans la direction ascendante à l'encontre de la force de gravité et le blocage amovible de chacun des éléments de retenue (13) sur l'élément de guidage respectif (15) dans une position d'arrêt dans la direction descendante au moyen d'un appareil d'auto-retenue (17).

14. Procédé selon la revendication 13, **caractérisé en ce que** l'appareil d'auto-retenue (17) comprend un cylindre creux (18) ainsi qu'un cylindre intérieur (19) guidé à travers le cylindre creux (18), le cylindre creux (18) étant agencé sur l'élément de guidage (15) et le cylindre intérieur (19) étant agencé sur l'élément de retenue (13), et le cylindre creux (18) comprenant au moins un espace de réception (20) pour recevoir au moins un élément d'arrêt (21), et les éléments d'arrêt (21) venant en prise par friction avec le cylindre intérieur dans la position d'arrêt.

15. Procédé selon la revendication 14, **caractérisé en ce que** la prise par friction est effectuée par une pluralité des éléments d'arrêt (21) agencés dans l'espace de réception (20) configuré sous forme d'espace annulaire.

16. Procédé selon la revendication 15, **caractérisé en ce que** des billes sont utilisées en tant qu'éléments d'arrêt (21).

17. Procédé selon l'une quelconque des revendications 14 à 16, **caractérisé par** la réalisation de la prise par friction dans la position d'arrêt par serrage des éléments d'arrêt (21) dans l'espace de réception (20) qui se rétrécit dans la direction descendante.

18. Procédé selon l'une quelconque des revendications 14 à 17, **caractérisé par** la sollicitation des éléments d'arrêt (21) dans la direction descendante avec une force de ressort au moyen d'au moins un élément à ressort (28) agencé dans l'espace de réception (20).

19. Procédé selon l'une quelconque des revendications 14 à 18, **caractérisé par** la libération des éléments d'arrêt (21) de la prise par friction dans la position d'arrêt au moyen d'un manchon coulissant (29) agencé dans l'espace de réception (20) sous les éléments d'arrêt (21) autour du cylindre intérieur (19) par déplacement du manchon coulissant (2) dans la direction longitudinale du cylindre intérieur (19) au moyen d'un élément d'actionnement (30).

20. Procédé selon l'une quelconque des revendications 14 à 19, **caractérisé par** le soulèvement des éléments de retenue (13) d'une position d'attente à une position de levage par pivotement commandable des éléments d'arrêt (21) configurés sous forme d'éléments à surface de glissement mobiles en pivotement (31).

21. Procédé selon la revendication 20, **caractérisé par** la mise en appui de guidage des éléments à surface de glissement (31) avec une tête de commande (32) agencée à l'extrémité libre supérieure de l'élément de guidage (15).

22. Procédé selon l'une quelconque des revendications 20 ou 21, **caractérisé par** la prise de moyens de réglage (16) avec l'élément d'actionnement (30) pour libérer les éléments d'arrêt (21) et abaisser les éléments de retenue (13) de la position de levage à la position d'attente.

23. Procédé de traitement d'articles de l'industrie de transformation alimentaire, comprenant un procédé d'acheminement des articles selon l'une quelconque des revendications 13 à 22, comprenant en outre le traitement des articles au moyen d'au moins un poste de traitement, la position en hauteur des articles étant réglée pendant l'acheminement en fonction de la hauteur de traitement prédéfinie respective pour le traitement des articles au moyen de l'au moins un poste de traitement.

24. Procédé selon la revendication 23, **caractérisé en ce que** les articles sont des volailles ou des morceaux de volailles.
